# EUROPÄISCHE PATENTANMELDUNG

(11) **EP 2 017 637 A1**
(43) Veröffentlichungstag der Anmeldung: **21.01.2009**
(21) Anmeldenummer: 08153963.7
(22) Anmeldetag: 02.04.2008
(51) Int. Cl.: G01S 5/00

(54) **Positionsbestimmung von Verkehrsteilnehmern im Bereich eines Verkehrsknotenpunkts für Fahrerassistenzsysteme**

(30) Priorität: 19.07.2007 DE 102007000390
(71) Anmelder: Signalbau Huber GmbH, 72669 Unterensingen (DE)
(72) Erfinder: Scheuerle, Karl-Ulrich, 71711 Murr (DE); Helms, Torben, 72622 Nürtingen-Reudern (DE); Zährl, Martin, 73230 Kirchheim (DE); Weingart, Jürgen, 73061 Ebersbach a. d. Fils (DE); Nolle, Matthias, 72622 Nürtingen (DE); Puggé, Mike, 72658 Bempflingen (DE); Rosskopf, Manfred, 72582 Grabenstetten (DE)
(74) Vertreter: TBK-Patent

(57) **Zusammenfassung**

An einem Verkehrsknotenpunkt ist ein Referenzpunkt definiert, dessen tatsächliche Positionsdaten bekannt sind, und in dessen Umgebung eine GPS-/Galileo-Empfangseinrichtung bereitgestellt ist, wobei aus den empfangenen Satellitendaten Positionsdaten des Referenzpunkts ermittelt werden. Aus den tatsächlichen Positionsdaten des Referenzpunkts und den bestimmten Positionsdaten werden Positionskorrekturdaten ermittelt, die an Verkehrsteilnehmer gesendet werden. Mit den empfangenen Positionskorrekturdaten können die von einem Verkehrsteilnehmer mittels GPS-/Galileo-Daten bestimmten Positionsdaten korrigiert werden.

## Beschreibung

Die Erfindung bezieht sich auf eine Positionsbestimmung von Verkehrsteilnehmern, zum Beispiel im Bereich eines Verkehrsknotenpunkts mit einer Lichtsignalanlage.

Fahrerassistenzsysteme, speziell in einem Sicherheitsbereich benötigen exakte Positionsbestimmungen in einem Kreuzungsbereich.

Bekannte Möglichkeiten, diese Positionsbestimmung durchzuführen, sind beispielsweise ein Erfassen mittels Laserscanner und detaillierter Kreuzungskarte mit Bezugspunkten, wobei Laser für Kraftfahrzeuge sehr kostenaufwendig sind.

Zur Steuerung von Verkehrssignalanlagen sind verschiedene Konzepte bekannt. Das Bereitstellen einer Kommunikation zwischen einem Fahrzeug und einer Steuerung einer Lichtsignalanlage, wie diese beispielsweise in EP 1 628 276 A2 beschrieben wird, ist bekannt.

Immer mehr Fahrzeuge sind mit Navigationsgeräten ausgestattet, die ein Empfangsgerät für eine Positionsbestimmung mittels Satelliten umfassen. Jedoch ist eine genaue Positionsbestimmung, wie sie bei einem Verkehrsknoten notwendig ist, aufgrund von z.B. Störeinflüssen und Ungenauigkeit, kaum möglich. Selbst mit Verfahren, wie etwa dem DGPS (differential GPS) ist eine Positionsgenauigkeit von weniger als 2m kaum möglich.

Dementsprechend liegt der Erfindung die Aufgabe zu Grunde, die vorstehenden Probleme des Standes der Technik zu überwinden, und so eine verbesserte Positionsbestimmung von Verkehrsteilnehmern im Bereich einer Lichtsignalanlage bereitzustellen, wobei es möglich ist, von Verkehrsteilnehmern jederzeit, so genau wie möglich, und kostengünstig im Hinblick auf erforderliche Zusatzeinrichtungen z.B. im Kraftfahrzeug, deren Position ermitteln zu können.

Die Aufgabe wird erfindungsgemäß jeweils durch eine Vorrichtung gemäß Anspruch 1, einem Fahrzeug gemäß Anspruch 5, einem System gemäß Anspruch 8 und Verfahren gemäß den Ansprüchen 9 und 10 gelöst.

Weitere vorteilhafte Ausführungsbeispiele der Erfindung sind in den abhängigen Ansprüchen dargelegt.

Im Folgenden werden bevorzugte Ausführungsbeispiele der Erfindung mit Bezug auf die anhängenden Zeichnungen beschrieben, in denen gilt:
Fig. 1 zeigt einen Verkehrsknotenpunkt mit einer Lichtsignalanlage, an dem die Erfindung gemäß einem Ausführungsbeispiel angewendet wird;

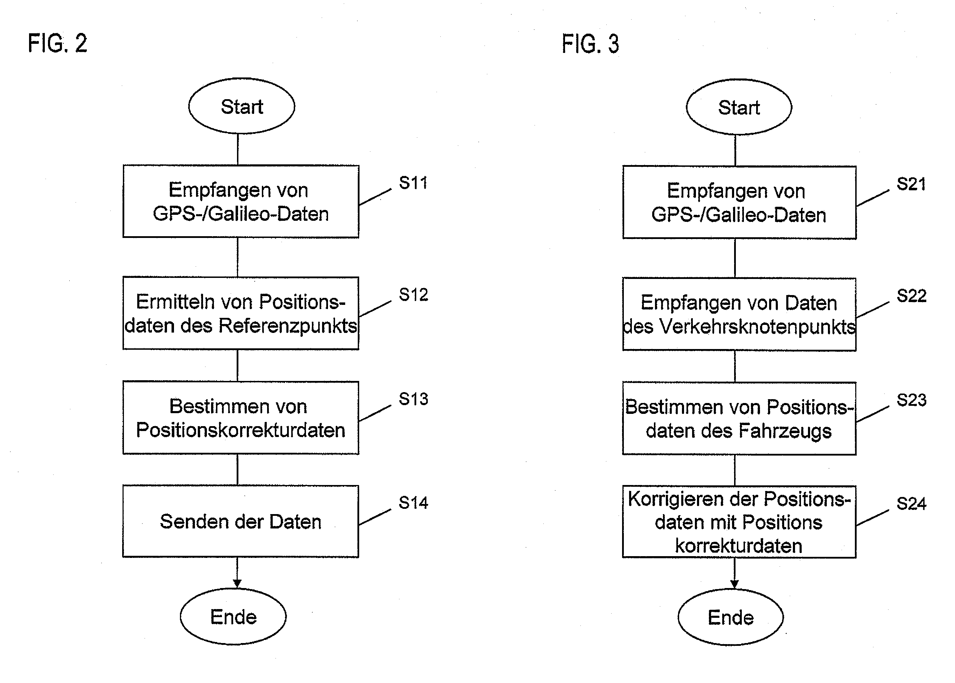

Fig. 2 zeigt ein Ablaufdiagramm eines Verfahrens gemäß dem ersten Ausführungsbeispiel der Erfindung; und
Fig. 3 zeigt ein Ablaufdiagramm eines Verfahrens gemäß einem zweiten Ausführungsbeispiel der Erfindung.

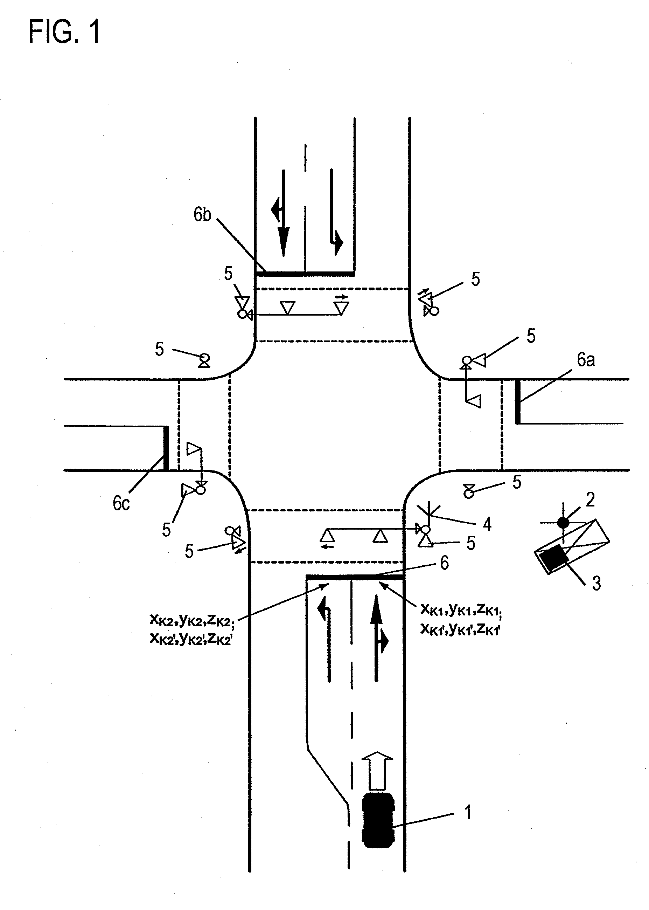

In Fig. 1 ist ein Verkehrsknotenpunkt gemäß einem Ausführungsbeispiel der Erfindung gezeigt. Dieser Verkehrsknotenpunkt ist eine Kreuzung, wobei der Verkehr mittels einer Lichtsignalanlage gesteuert wird, und daher aus einer Steuerung sowie einer Vielzahl von Lichtsignalen 5 besteht.

In der Umgebung des Verkehrsknotenpunkts ist ein Referenzpunkt 2 definiert, dessen Positionsdaten möglichst genau vermessen werden. Dies kann beispielsweise bei der Installation der Lichtsignalanlage geschehen. Dieses Einmessen sollte mit einer Genauigkeit im Bereich von wenigen Zentimetern erfolgen.

Neben den Positionsdaten des Referenzpunkts können weiterhin noch signifikante bzw. verkehrstechnisch relevante Punkte des Verkehrsknotenpunktes relativ zu dem Referenzpunkt 2 vermessen werden. Diese verkehrsknotenabhängigen Punkte können zum Beispiel Haltelinien 6, 6a, 6b, 6c auf verschiedenen Verkehrsspuren sein.

Diese Positionsdaten können als Daten gespeichert werden. So entstehen knotenabhängige Datensätze mit Einträgen wie z.B.
*Haltebalken K1*
*an Koordinaten x_{K1}, y_{K1}, z_{K1}; x_{K1'}, y_{K1'}, z_{K1'}; Zeitstempel Haltebalken K2*
*an Koordinaten x_{K2}, y_{K2}, z_{K2}; x_{K2'}, y_{K2'}, z_{K2'}; Zeitstempel* ...

Um gegebenenfalls schnell und stark schwankende Störeinflüsse ausgleichen zu können, kann ein Zeitstempel mit übertragen werden, der eine Korrektur im Fahrzeug ermöglicht.

An oder in der Nähe des Referenzpunkts 2 ist ein GPS- und/oder Galileo-Empfänger 3 positioniert. Im Folgenden wird stellvertretend von einem GPS-/Galileo-Empfänger gesprochen. Dieser Empfänger empfängt kontinuierlich von den nutzbaren Satelliten Daten (Schritt S11), aus denen Positionsdaten seiner Position ermittelt werden (Schritt S12).

Da es selbst mit Methoden, wie etwa DGPS (differential GPS), kaum möglich ist, eine Positionsgenauigkeit von weniger als 2m zu erreichen, ist eine Positionierung auf einem Verkehrsknoten, z.B. zum Überwachen des Verkehrsflusses, nur mittels der Satellitendaten zu ungenau.

Die Positionsungenauigkeit resultiert beispielsweise aus einer ortsabhängigen Ungenauigkeit der einzelnen Satelliten.

Mit Hilfe einer Positionskorrekturdatenbestimmungseinrichtung können aus den bekannten (genauen) Positionsdaten des Referenzpunktes 2 und den aktuell mittels GPS/Galileo gemessenen Positionsdaten, die durch die ortsabhängigen Ungenauigkeiten der einzelnen Satelliten beeinflusst sind, Positionskorrekturdaten bereitgestellt werden (Schritt S13). Die lokale Ermittlung und Bereitstellung der Korrekturdaten hat den Vorteil, dass mit einer Annäherung an den Referenzpunkt die Genauigkeit zunimmt. Dies kommt der Anwendung, insbesondere dass kritische Punkte in der Nähe des Referenzpunktes übermittelt werden können, entgegen.

Positionskorrekturdaten können zum Beispiel aus einer Differenz zwischen einer Koordinate der tatsächlichen Position des Referenzpunktes 2 und der entsprechenden Koordinate der aktuellen, mittels der Satelliten bestimmten Position bestimmt werden.

Die so ermittelten Positionskorrekturdaten und Positionsdaten von verkehrsknotenabhängigen Einrichtungen können in einer Speichereinrichtung gespeichert werden.

An dem Verkehrsknotenpunkt ist eine Sendeeinrichtung 4 angebracht, die dazu fähig ist, diese Daten an sich dem Verkehrsknotenpunkt nähernde Verkehrsteilnehmer 1 zu senden. Das Senden (Schritt S14) kann kontinuierlich erfolgen. Die Reichweite des Senders muss ausreichend sein, dass ein sich nähernder Verkehrsteilnehmer 1, wie etwa ein Kraftfahrzeug, diese Daten rechtzeitig komplett empfangen und auswerten kann.

Ein Verkehrsteilnehmer 1, z.B. ein Fahrzeug, ist neben einer GPS-/Galileo-Empfangseinrichtung, die beispielsweise in einem Navigationsgerät enthalten sein kann, mit einer Empfangseinrichtung ausgestattet, um die von der Sendeeinrichtung 4 des Verkehrsknotenpunktes gesendeten Daten empfangen zu können (Schritt S22).

Die Positionsdaten, die anhand der von der fahrzeuginternen GPS-/Galileo-Empfangseinrichtung empfangenen (Schritt S21) Satellitendaten bestimmt werden (Schritt S22), unterliegen aufgrund der geringen Distanz zu der GPS-/Galileo-Empfangseinrichtung 3 des Referenzpunktes in etwa den gleichen Ungenauigkeiten.

So können mittels einer Korrektureinrichtung des Verkehrsteilnehmers, die z.B. in dem GPS/Galileo-Empfänger enthalten sein kann, die aktuellen mittels der GPS-/Galileo-Satelliten ermittelten Positionsdaten mit den empfangenen Positionskorrekturdaten verrechnet werden (Schritt S24), wodurch eine sehr genaue Position des Verkehrsteilnehmers erhalten wird. Diese sehr genaue Position kann ebenfalls in Relation zu den empfangenen Positionsdaten von knotenpunktabhängigen Einrichtungen gesetzt werden.

Dies führt zu einer sehr genauen Positionsbestimmung eines Verkehrsteilnehmers relativ zum Verkehrsknotenpunkt.

An einem Verkehrsknotenpunkt ist ein Referenzpunkt definiert, dessen tatsächliche Positionsdaten bekannt sind, und in dessen Umgebung eine GPS-/Galileo-Empfangseinrichtung bereitgestellt ist, wobei aus den empfangenen Satellitendaten Positionsdaten des Referenzpunkts ermittelt werden. Aus den tatsächlichen Positionsdaten des Referenzpunkts und den bestimmten Positionsdaten werden Positionskorrekturdaten ermittelt, die an Verkehrsteilnehmer gesendet werden. Mit den empfangenen Positionskorrekturdaten können die von einem Verkehrsteilnehmer mittels GPS-/Galileo-Daten bestimmten Positionsdaten korrigiert werden.

## Patentansprüche

1. Vorrichtung zur Bestimmung von Positionskorrekturdaten im Bereich eines Verkehrsknotenpunkts, mit
einer Speichereinrichtung, in der tatsächliche Positionsdaten eines Referenzpunkts gespeichert sind,
einer Empfangseinrichtung zum Empfangen von GPS-/ Galileo-Daten,
einer Positionskorrekturdatenbestimmungseinrichtung, die aus den empfangenen GPS-/Galileo-Daten und den tatsächlichen Positionsdaten des Referenzpunkts Positionskorrekturdaten bestimmt, und
einer Sendeeinrichtung zum Senden der Positionskorrekturdaten.

2. Vorrichtung gemäß Anspruch 1, wobei die Sendeeinrichtung einen Zeitstempel sendet.

3. Vorrichtung gemäß Anspruch 1 oder 2, wobei in der Speichereinrichtung tatsächliche Positionsdaten verkehrsknotenabhängiger Einrichtungen gespeichert sind, die mit Hilfe der Sendeeinrichtung gesendet werden.

4. Vorrichtung gemäß einem der vorhergehenden Ansprüche, weiterhin mit einer Positionsbestimmungseinrichtung zum Bestimmen von Positionsdaten des Referenzpunkts mit Hilfe der empfangenen GPS-/Galileo-Daten.

5. Fahrzeug mit
einer ersten Empfangseinrichtung zum Empfangen von GPS-/Galileo-Daten,
einer zweiten Empfangseinrichtung zum Empfangen von Daten einer Sendeeinrichtung eines Verkehrsknotenpunkts,
einer Positionsbestimmungseinrichtung zum Bestimmen von Positionsdaten des Fahrzeugs mit Hilfe der empfangenen GPS-/Galileo-Daten, und
einer Korrektureinrichtung zum Korrigieren der bestimmten Positionsdaten mit den in den empfangenen Daten enthaltenen Positionskorrekturdaten.

6. Fahrzeug gemäß Anspruch 5, wobei die Korrektureinrichtung die bestimmten Positionsdaten mit dem in den empfangenen Daten enthaltenen Zeitstempel korrigiert.

7. Fahrzeug gemäß Anspruch 5 oder 6, wobei die Korrektureinrichtung die in den empfangenen Daten enthaltenen Positionsdaten verkehrsknotenabhängiger Einrichtungen mit Hilfe der Positionskorrekturdaten korrigiert.

8. System zur Positionsbestimmung von Verkehrsteilnehmern im Bereich eines Verkehrsknotenpunkts, wobei das System die Vorrichtung gemäß einem der Ansprüche 1 bis 4 sowie ein Fahrzeug gemäß den Ansprüchen 5 bis 7 umfasst.

9. Verfahren zur Bestimmung von Positionskorrekturdaten im Bereich eines Verkehrsknotenpunkts, mit den Schritten
Empfangen von GPS-/Galileo-Daten über eine GPS-/ Galileo-Empfangseinrichtung,
Ermitteln von Positionsdaten eines Referenzpunkts mittels der empfangenen GPS-/Galileo-Daten,
Bestimmen von Positionskorrekturdaten, der der Abweichung zwischen den bestimmten Positionsdaten des Referenzpunkts und den in einer Speichereinrichtung gespeicherten tatsächlichen Positionsdaten des Referenzpunkts entspricht, und
Senden von Daten, die die Positionskorrekturdaten enthalten, mittels einer geeigneten Sendeeinrichtung.

10. Verfahren zum Korrigieren von Positionsdaten eines Fahrzeugs im Bereich eines Verkehrsknotenpunkts, mit den Schritten
Empfangen von GPS-/Galileo-Daten,
Empfangen von Daten einer Sendeeinrichtung eines Verkehrsknotenpunkts,
Bestimmen von Positionsdaten des Fahrzeugs mit Hilfe der empfangenen GPS-/Galileo Daten, und
Korrigieren der bestimmten Positionsdaten mit in den empfangenen Daten enthaltenen Positionskorrekturdaten.

11. Verfahren gemäß Anspruch 9 oder 10, wobei in den empfangenen Daten enthaltene Positionsdaten verkehrsknotenabhängiger Einrichtungen mit Hilfe der Positionskorrekturdaten korrigiert werden.
